# EUROPÄISCHE PATENTSCHRIFT

(11) **EP 3 372 403 B1**
(45) Veröffentlichungstag und Bekanntmachung des Hinweises auf die Patenterteilung: **29.04.2020**
(21) Anmeldenummer: 18160926.4
(22) Anmeldetag: 09.03.2018
(51) Int. Cl.: B32B 37/04, B32B 33/00, B42D 25/30, B42D 25/45, B29C 65/02, B29C 43/20, G06K 19/077

(54) **VERFAHREN UND VORRICHTUNG ZUR HERSTELLUNG EINES DOKUMENTS**
METHOD AND DEVICE FOR PRODUCING A DOCUMENT
PROCÉDÉ ET DISPOSITIF DE FABRICATION D'UN DOCUMENT

(30) Priorität: 10.03.2017 DE 102017203955
(43) Veröffentlichungstag der Anmeldung: 12.09.2018
(73) Patentinhaber: Bundesdruckerei GmbH, 10969 Berlin (DE)
(72) Erfinder: Springmann, Edward, 10249 Berlin (DE); Antonczik, Boris, 16567 Schönfließ (DE)
(74) Vertreter: Patentanwälte Bressel und Partner mbB

(56) Entgegenhaltungen:
- DE-A1- 19 732 712
- DE-A1-102015 003 187
- US-A1- 2003 175 505
- US-A1- 2011 089 676

## Beschreibung

Die Erfindung betrifft ein Verfahren und eine Vorrichtung zur Herstellung eines Dokuments, insbesondere eines Sicherheitsdokuments.

Die WO 2014/076046 A1 offenbart ein Verfahren zur Herstellung eines mehrlagigen Sicherheitsprodukts, umfassend die Verfahrensschritte der Bereitstellung einer Inlay-Lage oder eines die Inlay-Lage beinhaltenden Lagenverbundes sowie Aufbringung mindestens einer personalisierten und/oder individualisierten Laminationslage auf die Inlay-Lage oder den die Inlay-Lage beeinhaltenden Lagenverbund.

Die DE 10 2009 007 552 A1 offenbart ebenfalls ein Verfahren zur Herstellung von mehrlagigen Sicherheitsprodukten, bestehend aus zumindest einer Karte und zumindest einer auf zumindest einer Seite der Karte aufgebrachten Polymerfolie, welche als Rollenware bereitgestellt wird und mit zumindest einem Sicherheitsmerkmal versehen ist. Hierbei werden eine Rollenbahn der Polymerfolie und zumindest ein Streifen mit einer n-fachen Anzahl an Nutzen einer Kaschierstation zugeführt und kaschiert.

Die DE 10 2010 033 049 A1 offenbart ein Verfahren zur Herstellung eines Laminatverbundes für ein Sicherheits- und/oder Wertdokument, enthaltend zumindest eine erste Polymerschicht, eine zweite Polymerschicht und ein zwischen die erste und die zweite Polymerschicht einzulaminierendes Sicherheitsmerkmal.

In diesem Verfahren zur Herstellung von mehrlagigen Sicherheitsdokumenten können also verschiedene Lagen zusammengefügt und verbunden werden, beispielsweise durch eine Lamination.

Weiter ist bekannt, dass Fälschungsversuche für Sicherheitsprodukte, insbesondere Wert- und/oder Sicherheitsdokumente, unternommen werden. Eine Fälschung kann hierbei durch Nachahmung von Verfahrensschritten zur Herstellung des Sicherheitsproduktes und/oder durch Manipulation des fertig hergestellten Sicherheitsproduktes erfolgen.

Die DE 197 32 712 A1 offenbart einen insbesondere fälschungssicheren Pass und ein Verfahren zur Herstellung solcher Pässe.

Die DE 10 2015 003 187 A1 offenbart ein Verfahren zum Herstellen eines mehrlagigen Wertdokumentsubstrats, nach dem Verfahren erhältliche Wertdokumentsubstrate und Wertdokumente, insbesondere Banknoten, mit einem solchen Wertdokumentsubstrat.

Die US 2011/0089676 A1 offenbart ein Verfahren zum Prüfen einer Echtheit eines Sicherheitsdokuments sowie ein Dokument, welches ko-laminierte Schichten umfasst.

Die US 2003/175505 A1 offenbart eine Vorrichtung und Verfahren zur Nutzung von schrumpfbaren Printmedien.

Es stellt sich das technische Problem, ein Verfahren und eine Vorrichtung zur Herstellung eines Dokuments, insbesondere eines Wert- und/oder Sicherheitsdokuments, zu schaffen, welche eine Fälschungssicherheit des Dokuments erhöhen.

Die Lösung des technischen Problems ergibt sich durch die Gegenstände mit den Merkmalen der Ansprüche 1 und 9. Weitere vorteilhafte Ausgestaltungen der Erfindung ergeben sich aus den Unteransprüchen.

Vorgeschlagen wird ein Verfahren zur Herstellung eines Dokuments. Das Dokument kann insbesondere ein Wert- und/oder Sicherheitsdokument sein. Das Dokument kann hierbei als Kartenkörper, insbesondere als mehrlagiger Kartenkörper, hergestellt werden. Insbesondere kann das Dokument oder ein Teil des Dokuments aus Kunststoff bestehen.

Als Sicherheitsdokument kann hierbei jedes Dokument bezeichnet werden, das eine physikalische Entität ist, die gegen ein unautorisiertes Herstellung und/ oder Verfälschen durch Sicherheitsmerkmale geschützt ist. Sicherheitsmerkmale können solche Merkmale sein, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/ oder Sicherheitselemente umfassen. Im Sinne der hier festgelegten Definition kann ein Sicherheitsdokument auch immer ein Sicherheitselement darstellen oder ein solches umfassen. Beispiele für Sicherheitsdokumente, welche auch Wertdokumente umfassen, die einen Wert repräsentieren, umfassen beispielsweise Reisepässe, Personalausweise, Führerscheine, Identitätskarten, Banknoten, Postwertzeichen, Kreditkarten, Smartcards und Etiketten. Als Smartcards können solche Sicherheitsdokumente bezeichnet werden, die ein Chipmodul umfassen, welches kontaktlos Informationen mit einem Verifikationsgerät austauschen kann.

In dem Verfahren werden eine erste Dokumentenlage und mindestens eine weitere Dokumentenlage, die auch als zweite Dokumentenlage bezeichnet werden kann, bereitgestellt. Eine Dokumentenlage kann insbesondere als Folie ausgebildet sein. Eine Dokumentenlage kann eine Einzellage, insbesondere eine Einzelfolie, sein.

Somit kann das herzustellende Dokument ein aus mehreren Lagen hergestelltes oder bestehendes Dokument sein. Die erste Dokumentenlage und/oder die mindestens eine weitere Dokumentenlage kann vorzugsweise aus einem laminierfähigen Material bestehen. In diesem Fall kann die erste Dokumentenlage auch als erste Laminationslage und die mindestens eine weitere Dokumentenlage als weitere Laminationslage bezeichnet werden.

Ein laminierfähiges Material kann insbesondere ein Kunststoffmaterial sein. Als Kunststoffmaterial kommen insbesondere Derivate oder auch Kombinationen der folgenden Kunststoffe infrage: Polycarbonat (PC), insbesondere Bisphenol-A-Polycarbonat, Polyethylenterephthalat (PET), deren Derivate wie Glykol-modifiziertes PET (PET-G), Polyvinylchlorid (PVC), Acrylnitril-Butadien-Styrol (ABS), thermoplastische Elastomere (TPE), insbesondere thermoplastisches Polyurethan (TPU). Auch andere Polyurethane können eingesetzt werden. Zusätzlich können auch wärmehärtende Harze und/oder Kunststoffe oder Mehrkomponentensysteme verwendet werden.

Vorzugsweise besteht die erste Dokumentenlage aus PC oder PET und die weiteren Dokumentenlage ebenfalls aus PC oder PET. In diesem Fall können die erste und die weitere Dokumententenlage nach dem nachfolgend noch erläuterten Fügen einen monolithischen Körper bilden.

Neben der ersten Dokumentenlage und mindestens einer weiteren Dokumentenlage kann das herzustellende Dokument auch noch weitere Dokumentenlagen, insbesondere weitere Laminationslagen, umfassen. So kann die erste Dokumentenlage Teil eines Lagenverbundes sein, der neben der ersten Dokumentenlage eine weitere Dokumentenlage umfassen kann.

Weitere Dokumentenlagen können auch Schutzlagen oder eine Inlay-Lage, die beispielsweise in der vorhergehend erläuterten WO 2014/076046 A1 beschrieben ist, sein.

Das Dokument, insbesondere eine Dokumentenlage, weiter insbesondere die erste und/oder weitere Dokumentenlage, kann mindestens eine erfassbare Information aufweisen oder enthalten. Dies wird nachfolgend auch als dokumentenspezifische oder lagespezifische Information bezeichnet.

Die Information kann hierbei eine vorbestimmte Repräsentation aufweisen, insbesondere eine optische, insbesondere grafische, Repräsentation, eine elektrische Repräsentation oder eine magnetische Repräsentation. Auch die Repräsentation kann erfassbar sein, insbesondere mit einer geeigneten Erfassungseinrichtung. Die Information kann hierbei durch die Repräsentation kodiert sein. Auch kann die Information in Abhängigkeit der Repräsentation bestimmbar sein.

Eine Information kann z.B. durch mindestens ein grafisches Element, z.B. durch mindestens ein Schriftzeichen oder ein Lichtbild, gegeben sein. Eine Information kann auch durch Daten gegeben oder kodiert sein, die in einer Speichereinrichtung des Dokuments, insbesondere einer Inlay-Lage, gespeichert sind. Eine Information kann auch durch ein Hologramm gegeben sein.

Hierbei kann die erfassbare Information durch eine entsprechende Erfassungseinrichtung und/oder durch einen menschlichen Nutzer erfassbar sein. So kann die Information optisch, z.B. durch eine Bilderfassungseinrichtung oder visuell, erfassbar sein. Allerdings ist es auch möglich, dass die Information auf nicht-optische Weise erfassbar ist, z.B. elektrisch, mechanisch, induktiv oder kapazitiv.

Die Information kann ein Sicherheitsmerkmal des Dokuments oder der Dokumentenlage oder einen Teil davon bilden. Sicherheitsmerkmale von oder für Dokumente sind hierbei dem Fachmann bekannt und umfassen beispielsweise und nicht abschließend Lichtbilder, Hologramme, Kinegramme, digitale Wasserzeichen, Interferenzbilder (Kopierfallen) sowie Durchlichtregister.

Eine Dokumentenlage, insbesondere die erste Dokumentenlage, kann z.B. eine personalisierte und/oder individualisierte Laminationslage sein. Eine personalisierte und/oder individualisierte Laminationslage kann hierbei eine Lage bezeichnet, welche das Sicherheitsprodukt individualisierende Informationen und/oder eine zur Führung des Dokuments autorisierte Person personalisierende Informationen enthält. Diese Informationen können z.B. als Sicherheitsmerkmale oder -elemente in oder auf der personalisierten und/oder individualisierten Dokumentenlage enthalten sein. Solche Informationen können beispielsweise ein Name, eine Dokumenten- oder Seriennummer, eine Unterschrift, ein Lichtbild oder ein Hologramm sein.

Die Informationen der personalisierten und/oder individualisierten Dokumentenlage können auf verschiedene Weisen auf oder in die Dokumentenlage eingebracht werden.

So kann eine Dokumentenlage eine Drucklage sein, wobei eine Information auf die als Drucklage ausgebildete Dokumentenlage auf- oder eingedruckt ist. Entsprechende Druckverfahren, insbesondere Tiefdruck-, Hochdruck-, Digitaldruck-, Inkjet- und Offset-Druckverfahren sind dem Fachmann bekannt.

Alternativ kann die Information eingraviert sein, beispielsweise mittels eines Lasergravurverfahrens. Selbstverständlich sind auch andere Verfahren zur Ein- oder Anbringung der Informationen in die personalisierte und/oder individualisierte Dokumentenlage vorstellbar.

Vorzugsweise, jedoch nicht zwingend, ist die erste Dokumentenlage eine Drucklage, wobei auf oder in die erste Dokumentenlage Informationen, insbesondere optisch erfassbare, weiter insbesondere visuell erfassbare, Informationen auf- oder eingedruckt sind. Insbesondere können diese Informationen die vorhergehend erläuterten personalisierenden und/oder individualisierenden Informationen sein.

Weiter wird die mindestens eine weitere Drucklage über oder unter der ersten Drucklage angeordnet.

Hierbei können sich Richtungsangaben wie "über" oder "unter" auf eine dokumentenlagenspezifische Vertikalrichtung beziehen. Diese Vertikalrichtung kann hierbei senkrecht zu einer, insbesondere ungekrümmten, Oberfläche der Dokumentenlage, insbesondere einer unterseitigen oder oberseitigen Oberfläche, orientiert sein. Eine Oberseite der Dokumentenlage kann hierbei eine Seite bezeichnen, die im fertig hergestellten Zustand des Dokuments hin zur Vorderseite des Dokuments orientiert ist. Entsprechend kann eine Unterseite der Dokumentenlage eine Seite bezeichnen, die im fertig hergestellten Zustand des Dokuments hin zur Rückseite des Dokuments orientiert ist. Weiter kann die Vertikalrichtung von der Unterseite der Dokumentenlage hin zur Oberseite der Dokumentenlage orientiert sein.

Ein dokumentenlagenspezifisches oder dokumentenspezifisches Koordinatensystem kann durch diese Vertikalrichtung sowie eine Longitudinalrichtung und eine Lateralrichtung definiert sein. Hierbei kann die unter- und/oder oberseitige Oberfläche der Dokumentenlage bzw. eine Vorder- und Rückseite des Dokuments parallel zu einer Ebene orientiert sein, die von der Longitudinal- und der Lateralrichtung aufgespannt wird.

Die Vertikalrichtung, die Longitudinalrichtung und die Lateralrichtung können hierbei jeweils senkrecht zueinander orientiert sein. Insbesondere kann sich die Longitudinalrichtung parallel zu einem Längsrand der Dokumentenlage/des Dokuments und die Lateralrichtung parallel zu lateralen Rändern der Dokumentenlage/des Dokuments erstrecken.

Mit anderen Worten kann eine Länge der Dokumentenlage/des Dokuments eine Dimension entlang der Longitudinalrichtung und eine Breite der Dokumentenlage/des Dokuments eine Dimension entlang der Lateralrichtung sein. Eine Dicke der Dokumentenlage/des Dokuments kann eine Dimension der Dokumentenlage entlang der Vertikalrichtung sein.

Die erste Dokumentenlage kann einen rechteckförmigen Randverlauf aufweisen. Dieser kann in einer Projektionsebene, die senkrecht zur vorhergehend erläuterten Vertikalrichtung orientiert ist, gegeben sein. Die erste Dokumentenlage kann hierbei eine konstante oder sich verändernde Dicke aufweisen. Die Dicke kann hierbei in einem Bereich von 200 µm bis 750 µm liegen.

Auch die weitere Dokumentenlage kann hierbei eine konstante oder sich verändernde Dicke aufweisen. Die Dicke kann hierbei in einem Bereich von 200 µm bis 750 µm liegen. Die weitere Dokumentenlage kann beispielsweise transparent oder transluzent sein. Alternativ kann die weitere Dokumentenlage eine vorbestimmte Färbung aufweisen. Auch kann die weitere Dokumentenlage opak ausgebildet sein. Weiter kann die weitere Dokumentenlage aus einem Material mit vorbestimmter Dichte ausgebildet sein. Die Dichte kann sich hierbei von einer Dichte des Materials der ersten Dokumentenlage unterscheiden. Insbesondere kann die Dichte der weiteren Dokumentenlage geringer als die Dichte der ersten Dokumentenlage sein.

Insbesondere kann also die weitere Dokumentenlage auf oder an der oberseitigen Oberfläche der ersten Dokumentenlage angeordnet werden. Alternativ kann die weitere Dokumentenlage auf oder an der unterseitigen Oberfläche der ersten Dokumentenlage angeordnet werden. Wird die weitere Dokumentenlage über einem Bereich der ersten Dokumentenlage angeordnet, der eine Information aufweist oder enthält, so kann die weitere Dokumentenlage vorzugsweise transparent sein. Wird die weitere Dokumentenlage unter einem derartigen Bereich der ersten Dokumentenlage angeordnet, so kann die weitere Dokumentenlage vorzugsweise opak sein.

Hierdurch wird ein Lagenverbund bereitgestellt werden, der die erste Dokumentenlage und die über oder unter der ersten Dokumentenlage angeordnete weitere Dokumentenlage umfasst. Der derart bereitgestellte Lagenverbund kann auch als ungefügter Lagenverbund bezeichnet werden.

Weiter kann, zur Bereitstellung des ungefügten Lagenverbunds, die weitere Dokumentenlage an der ersten Dokumentenlage (vor-)befestigt werden. Ein Befestigen kann hierbei beispielsweise mittels Ultraschall-Heften erfolgen. Selbstverständlich sind auch andere Verfahren zur Befestigung vorstellbar, beispielsweise ein Heißschweißen.

Weiter werden die Dokumentenlagen derart relativ zueinander angeordnet, dass der ungefügte Lagenverbund, der aus der ersten und der weiteren Dokumentenlage bereitgestellt wird, mindestens einen verdickten oder verdünnten Teilbereich aufweist.

Insbesondere können die Dokumentenlagen derart relativ zueinander angeordnet werden und/oder ausgebildet sein, dass der verdickte oder verdünnte Teilbereich eine vorbestimmte Raumlage, eine vorbestimmte Größe und/oder eine vorbestimmte Form aufweist. Mit anderen Worten können Eigenschaften des vorbestimmten Teilbereichs, insbesondere eine Größe, eine Form und eine Raumlage des Teilbereichs, vorbestimmt sein.

Ein verdickter Teilbereich, der auch als verdickter Abschnitt bezeichnet werden kann, kann einen Teilbereich des ungefügten Lagenverbunds bezeichnen, der eine Dicke aufweist, die größer als eine mittlere Dicke des ungefügten Lagenverbunds ist. Alternativ oder kumulativ kann ein verdickter Teilbereich einen Teilbereich bezeichnen, in dem eine Dicke größer ist als in einem benachbarten Teilbereich des ungefügten Lagenverbunds oder als in einem Bereich außerhalb des Teilbereichs. Insbesondere kann ein Dicke des ungefügten Lagenverbunds bei einem Übergang zu einem verdickten Teilbereich zunehmen, z.B. sprungartig oder linear oder stetig. Eine Dicke im verdickten Teilbereich kann um mehr als einen vorbestimmten Prozentsatz größer als eine mittlere Dicke des ungefügten Lagenverbunds oder eine Dicke außerhalb des verdickten Teilbereichs sein, z.B. um mehr als 10%, mehr als 30% oder mehr als 50%. In einem verdickten Teilbereich kann eine Dicke des ungefügten Lagenverbunds beispielsweise in einem Bereich von 400 µm (ausschließlich) bis 2.250 µm (einschließlich) liegen.

Entsprechend kann ein verdünnter Teilbereich, der auch als verdünnter Abschnitt bezeichnet werden kann, einen Teilbereich des ungefügten Lagenverbunds bezeichnen, der eine Dicke aufweist, die kleiner als eine mittlere Dicke des ungefügten Lagenverbunds ist. Alternativ oder kumulativ kann ein verdünnter Teilbereich einen Teilbereich bezeichnen, in dem eine Dicke kleiner ist als in einem benachbarten Teilbereich des ungefügten Lagenverbunds oder als in einem Bereich außerhalb des Teilbereichs. Insbesondere kann ein Dicke des ungefügten Lagenverbunds bei einem Übergang zu einem verdünnten Teilbereich abnehmen, z.B. sprungartig oder linear oder stetig. Eine Dicke im verdünnten Teilbereich kann um mehr als einen vorbestimmten Prozentsatz kleiner als eine mittlere Dicke des ungefügten Lagenverbunds oder eine Dicke außerhalb des verdünnten Teilbereichs sein, z.B. um mehr als 10% oder mehr als 30%, aber weniger als 50%. In einem verdünnten Teilbereich kann eine Dicke des ungefügten Lagenverbunds beispielsweise in einem Bereich von 280 µm (einschließlich) bis 1.050 µm (einschließlich) liegen.

Eine Dicke im verdickten oder verdünnten Teilbereich kann hierbei außerhalb von Toleranzgrenzen eines ohne verdickten oder verdünnten Teilbereichs bereitgestellten Lagenverbunds liegen.

Eine Verdickung kann z.B. durch eine Erhebung, einen Vorsprung oder einen erhabenen Teilbereich auf einer Oberfläche der ersten Dokumentenlage und/oder auf einer Oberfläche der weiteren Dokumentenlage gebildet werden, wobei die Oberflächen im ungefügten Lagenverbund einander zugewandte Oberfläche sind.

Eine Verdünnung kann z.B. durch eine Vertiefung oder eine Ausnehmung auf einer Oberfläche der ersten Dokumentenlage und/oder auf einer Oberfläche der weiteren Dokumentenlage gebildet werden, wobei die Oberflächen im ungefügten Lagenverbund einander zugewandte Oberfläche sind.

Es ist weiter möglich, dass mindestens eine der Dokumentenlagen derart ausgebildet ist, dass in einer gewünschten Relativanordnung der ungefügte Lagenverbund den mindestens einen verdickten oder verdünnten Teilbereich aufweist. Beispielsweise kann die erste Dokumentenlage mindestens einen verdickten oder verdünnten Teilbereich aufweisen. Alternativ oder kumulativ kann die weitere Dokumentenlage einen verdickten oder verdünnten Teilbereich aufweisen. Es ist aber auch möglich, dass die erste und die weitere Dokumentenlage jeweils eine konstante Dicke aufweist, wobei jedoch die weitere Dokumentenlage eine geringere Breite und/oder einen geringere Länge als die erste Dokumentenlage aufweist.

Insbesondere wird die weitere Dokumentenlage derart angeordnet und/oder ist die weitere Dokumentenlage derart ausgebildet, dass der ungefügte Lagenverbund, der aus der ersten und der weiteren Dokumentenlage bereitgestellt wird, mindestens einen verdickten oder verdünnten Teilbereich aufweist.

Die Dicke des ungefügten Lageverbunds kann hierbei eine Summe aus der Dicke der ersten Dokumentenlage und der Dicke der weiteren Dokumentenlage im ungefügten Zustand sein. Insbesondere können die Dicken von entlang der Vertikalrichtung übereinander angeordneten Teilbereichen/Abschnitten der Dokumentenlagen aufsummiert werden, um die Dicke des ungefügten Lagenverbunds zu bestimmen.

Auch kann mindestens eine dritte Dokumentenlage über der obersten Dokumentenlage des ungefügten Lagenverbunds angeordnet werden. Alternativ oder kumulativ kann mindestens eine dritte Dokumentenlage über der untersten Dokumentenlage des ungefügten Lagenverbunds angeordnet werden. Diese dritte Dokumentenlage kann die gleiche Breite und/oder die gleiche Länge und/oder die gleiche Dicke wie die erste Dokumentenlage aufweisen. Somit kann der ungefügte Lagenverbund mehr als zwei Dokumentenlagen umfassen. Insbesondere kann die vorhergehend erläuterte weitere Dokumentenlage (zweite Dokumentenlage) in dem ungefügten Lagenverbund zwischen der ersten und der dritten Dokumentenlage angeordnet sein.

Weiter wird der ungefügte Lagenverbund gefügt. Hierdurch wird ein gefügter Lagenverbund hergestellt. Das Fügen kann insbesondere durch ein Verfahren zur Herstellung einer stoffschlüssigen Verbindung zwischen der ersten und der weiteren Dokumentenlage erfolgen. Das Fügen kann mit mindestens einem vorbestimmten Fügeparameter, beispielsweise einer Fügetemperatur, einem Fügedruck und/oder einer Fügezeitdauer durchgeführt werden.

Vorzugsweise kann das Fügen durch eine Lamination erfolgen. Bei einer Lamination kann ein Druck aus einem vorbestimmten Druckbereich auf den Lagenverbund ausgeübt werden. Weiter kann thermische Energie auf den Lagenverbund übertragen werden. Die Lamination kann also eine Heißlamination, aber auch eine Kaltlamination sein.

Hierbei kann der gefügte Lagenverbund als Kartenkörper oder als Kartenkörperteil ausgebildet sein.

Nach dem Fügen kann der Lagenverbund eine konstante Dicke, insbesondere also keine verdickten oder verdünnten Teilbereich, aufweisen.

Während des Fügens kann die sich verändernde Dicke des ungefügten Lagenverbunds auf eine konstante Dicke verändert werden. Beim Fügen kann zumindest in mindestens einem Teilbereich des Lagenverbunds, insbesondere in mindestens einem Teilbereich der ersten und/oder der weiteren Dokumentenlage, eine Materialverschiebung oderverdrängung erfolgen, insbesondere eine lokale Materialverdrängung. Diese kann insbesondere in einem verdickten oder verdünnten Teilbereich oder in einem diesen Teilbereich umfassenden Bereich des Lagenverbunds erfolgen.

Durch die Materialverdrängung kann auch eine Information, insbesondere eine lagespezifische Information, weiter insbesondere ein Informationsinhalt dieser Information, verändert werden. Eine Änderung der Information kann insbesondere eine Änderung der Repräsentation der Information bezeichnen. Die Repräsentation kann z.B. eine grafische Repräsentation sein, wobei die Erfindung allerdings nicht auf grafische repräsentierbare Informationen beschränkt ist. Mit anderen Worten kann sich eine Repräsentation der Information im oder auf dem ungefügten Lageverbund von einer Repräsentation der Information im gefügten Lageverbund unterscheiden. Wird eine solche grafische Repräsentation geändert, so kann ein Erscheinungsbild der Information verändert werden.

Die Änderung kann hierbei eine gezielte Änderung sein, insbesondere eine Änderung zur Herstellung einer gewünschten Information, z.B. einer gewünschten Repräsentation der Information. Insbesondere kann die Veränderung derart erfolgen, dass aus einer Ausgangs-Repräsentation, z.B. aus einer grafischen Ausgangs-Repräsentation, der Information eine gewünschte Soll-Repräsentation, z.B. eine grafische Soll-Repräsentation, hergestellt wird.

Z.B. kann durch das Fügen eine Position und/oder Orientierung mindestens eines Raumbereichs der Dokumentenlage verändert werden, wobei der Raumbereich zumindest einen Teil der Information enthält oder bereitstellt. Die Position und/oder Orientierung kann sich in einem dokumentenlagenfesten Koordinatensystem verändern.

Weiter kann durch das Fügen des ungefügten Lagenverbunds eine geometrische Transformation mindestens eines Raumbereichs der Dokumentenlage erfolgen, wobei der Raumbereich zumindest einen Teil der Information oder ihrer Repräsentation enthält oder bereitstellt. Die geometrische Transformation kann insbesondere eine definierte geometrische Transformation, mit anderen Worten eine gezielte geometrische Transformation, sein.

Insbesondere kann die geometrische Transformation eine Transformation sein, die aus einer Ausgangs-Repräsentation, z.B. aus einer grafischen Ausgangs-Repräsentation, der Information eine gewünschte Soll-Repräsentation, z.B. eine grafische Soll-Repräsentation, herstellt. Ist die Information beispielsweise eine gedruckte Information, insbesondere Schriftzeichen oder ein Teil eines Lichtbildes, so kann, wie nachfolgend noch näher erläutert, durch das Fügen eine geometrische Transformation der gedruckten Information erfolgen.

Wie nachfolgend noch näher erläutert, können die Dokumentenlagen auch derart relativ zueinander angeordnet werden und/oder kann mindestens eine der Dokumentenlagen derart ausgebildet sein, dass der gefügte Lagenverbund eine sich verändernde Dichte, insbesondere optische Dichte, aufweist.

Z.B. kann der gefügte Lagenverbund einen Teilbereich mit einer vorbestimmten Dichte aufweisen, wobei diese Dichte höher oder niedriger als eine mittlere Dichte des gefügten Lagenverbundes ist. Alternativ oder kumulativ kann der gefügte Lagenverbund zumindest einen Teilbereich mit einer Dichte aufweisen, die höher oder niedriger als eine Dichte außerhalb des Teilbereichs ist.

Ein derartiger Teilbereich kann ein Wasserzeichen in dem gefügten Lagenverbund bilden. Somit kann der Teilbereich durch auflichtbasierte oder durchlichtbasierte Verfahren detektiert und verifiziert werden.

Insbesondere kann also der verdickte oder verdünnte Teilbereich des ungefügten Lagenverbunds derart bereitgestellt werden, dass durch das Fügen eine gewünschte, insbesondere gezielte, Informationsänderung erfolgt. Mit anderen Worten kann ein Dickenprofil des ungefügten Lageverbunds derart gewählt werden, dass durch das Fügen eine gewünschte, insbesondere gezielte, Informationsänderung erfolgt.

Die Informationsänderung kann hierbei unter anderem abhängig von Eigenschaften, insbesondere Materialeigenschaften, der Dokumentenlagen und von Fügeparameter sein.

Somit ergibt sich in vorteilhafter Weise eine höhere Fälschungssicherheit des wie vorgeschlagen hergestellten Dokuments.

Aufgrund der vorhergehend erläuterten Informationsänderung durch das Fügen kann sichergestellt werden, dass der Lagenverbund nach dem Fügen eine Information enthält, die sich von der Information vor dem Fügen unterscheidet. Insbesondere kann die Information nach dem Fügen einer Soll-Information entsprechen, während die Information vor dem Fügen sich um mehr als ein vorbestimmtes Maß von der Soll-Information unterscheidet.

Somit kann eine Echtheit des gefügten Lagenverbunds oder eines Dokuments, welches diesen gefügten Lagenverbund umfasst, verifiziert werden, wenn die Informationsänderung nicht mehr als ein vorbestimmtes Maß von einer Soll-Änderung abweicht und/oder wenn die Information im gefügten Lageverbund einer Soll-Information entspricht. Die Echtheit des gefügten Lagenverbunds oder eines Dokuments, welches diesen gefügten Lagenverbund umfasst, kann nicht verifiziert werden, wenn die Informationsänderung mehr als ein vorbestimmtes Maß von der Soll-Änderung abweicht und/oder wenn die Information im gefügten Lageverbund nicht der Soll-Information entspricht.

Anschaulich kann dies am Beispiel einer visuell erfassbaren Information erläutert werden. Im ungefügten Lagenverbund kann die Information eine Ausgangs-Repräsentation aufweisen, insbesondere eine von deiner Soll-Repräsentation abweichende Repräsentation, z.B. eine verzerrte Repräsentation. Nur wenn die Dokumentenlagen in dem ungefügten Lagenverbund in vorbestimmter Weise relativ zueinander angeordnet sind und/oder in vorbestimmter Weise ausgebildet sind und/oder mit vorbestimmten Fügeparametern gefügt werden, so kann durch das Fügen aus der Ausgangs-Repräsentation die Soll-Repräsentation der Information, z.B. eine nicht verzerrte Repräsentation, hergestellt werden. Werden die Dokumentenlagen in dem ungefügten Lagenverbund nicht in vorbestimmter Weise relativ zueinander angeordnet sind und/oder sind die Dokumentenlage nicht in vorbestimmter Weise ausgebildet und/oder werden die Dokumentenlagen nicht mit vorbestimmten Fügeparametern gefügt, so kann durch das Fügen aus der Ausgangs-Repräsentation nicht die Soll-Repräsentation der Information hergestellt werden.

Hierbei kann die Soll-Information vorbekannt oder bestimmbar sein.

Beispielsweise kann die Soll-Information im oder auf dem gefügten Lagenverbund oder in oder auf einem Dokument, welches diesen Lageverbund umfasst, vorhanden sein, insbesondere in einer Repräsentation, die von der durch das Fügen veränderbaren Repräsentation verschieden ist. Beispielsweise kann die Soll-Information auch mehrfach im oder auf dem gefügten Lagenverbund oder in oder auf einem Dokument, welches diesen Lageverbund umfasst, vorhanden sein, insbesondere mit voneinander verschiedenen Repräsentationen. Somit kann die Soll-Information von dem gefügten Lageverbund erfasst werden. Die Soll-Information kann eine sich nicht durch das Fügen verändernde oder veränderbare Information sein. So ist es z.B. vorstellbar, dass die Soll-Information in einer Speichereinrichtung des Dokuments oder des Lageverbunds, z.B. einer Speichereinrichtung einer Inlay-Lage, gespeichert und abrufbar sein.

Alternativ kann die Soll-Information z.B. in einer lageverbundexternen Speichereinrichtung gespeichert und abrufbar sein.

Ist die Information beispielsweise ein biometrisches Merkmal, z.B. ein Augenabstand, welches in Abhängigkeit einer sich durch das Fügen verändernden grafischen Repräsentation eines Lichtbilds bestimmt werden kann, so kann ein Sollwert oder ein Sollwertbereich dieses Merkmals in einer Speichereinrichtung des Dokuments oder in einer dokumentenexternen Speichereinrichtung abrufbar gespeichert sein. Weicht der Wert des biometrischen Merkmals, welcher in Abhängigkeit der grafischen Repräsentation des Lichtbilds nach dem Fügen bestimmt wird, um mehr als ein vorbestimmtes Maß von dem Sollwert ab oder liegt er außerhalb des Sollwertbereichs, so kann die Echtheit des Dokuments mit dem gefügten Lageverbund nicht verifiziert werden. Weicht der Wert des biometrischen Merkmals, welcher in Abhängigkeit der grafischen Repräsentation des Lichtbilds nach dem Fügen bestimmt wird, nicht mehr als ein vorbestimmtes Maß von dem Sollwert ab oder liegt er innerhalb des Sollwertbereichs, so kann die Echtheit des Dokuments mit dem gefügten Lageverbund verifiziert werden.

Mit anderen Worten kann die Informationsänderung und/oder der Ergebnis zur Verifikation des Dokuments genutzt werden. Insbesondere kann das Dokument als Fälschung klassifiziert werden, falls Informationen des Dokuments mit dem gefügten Lagenverbund von vorbestimmten Soll-Informationen abweichen.

Weiter kann das Dokument als Fälschung identifiziert werden, falls in einem Querschnitt des Dokuments kein Nachweis der ersten und der weiteren Dokumentenlage, insbesondere eines Materials der ersten und der weiteren Dokumentenlage, und/oder ein Nachweis einer vorbestimmten Materialverteilung erfolgen kann.

Mit anderen Worten wird ein Herstellen eines Dokuments mit gewünschten Eigenschaften erschwert, da ein Fälscher über Informationen sowohl über eine Ausbildung der Dokumentenlagen, insbesondere über eine geometrische Ausbildung, eine materialspezifische Ausbildung und weitere Eigenschaften der Dokumentenlagen als auch über Informationen über eine Anordnung der weiteren Dokumentenlage relativ zur ersten Dokumentenlage verfügen muss, um die gewünschten Information beim Fügen bereitzustellen. Nach dem vorgeschlagenen Herstellen wird ein Fälschen erschwert, da kein einfaches Auftrennen des Dokuments in die erste und weitere Dokumentenlage möglich ist.

In einer weiteren Ausführungsform ist eine maximale Breite der weiteren Dokumentenlage kleiner als eine maximale Breite der ersten Dokumentenlage. Alternativ, vorzugsweise jedoch kumulativ, ist eine maximale Länge der weiteren Dokumentenlage kleiner als eine maximale Länge der ersten Dokumentenlage. Hierbei werden Länge und Breite der Dokumentenlagen jeweils entlang der gleichen Raumrichtung erfasst. Mit anderen Worten weist also die weitere Dokumentenlage eine geringere Dimension als die erste Dokumentenlage auf. In diesem Fall können sowohl die erste als auch die weitere Dokumentenlage eine konstante Dicke aufweisen.

Alternativ ist es möglich, dass die Dokumentenlagen die gleiche Breite und die gleiche Länge aufweisen, wobei jedoch mindestens eine der Dokumentenlagen, insbesondere die weitere Dokumentenlage, eine sich verändernde Dicke aufweist.

Durch das Bereitstellen der weiteren Dokumentenalge mit im Vergleich zur ersten Dokumentenlage geringeren Dimensionen ergibt sich jedoch in vorteilhafter Weise eine einfachere Herstellung der weiteren Dokumentenlage, insbesondere durch Extrusion.

In einer weiteren Ausführungsform weist die weitere Dokumentenlage einen rechteckförmigen Randverlauf aus. Der Randverlauf kann hierbei in einer Projektionsebene gegeben sein, die senkrecht zur vorhergehend erläuterten Vertikalrichtung orientiert ist.

Hierdurch ergibt sich in vorteilhafter Weise eine einfache Ausgestaltung der weiteren Dokumentenlage.

Alternativ weist die weitere Dokumentenlage einen kreisförmigen oder ovalen Randverlauf auf. Hierdurch ergibt sich in vorteilhafter Weise eine gleichmäßigere Materialverdrängung beim Fügen, wodurch wiederum eine zuverlässigere Herstellung von gewünschten Dokumenteneigenschaften nach dem Fügen ermöglicht wird.

Es ist allerdings auch möglich, dass der Randverlauf der weiteren Dokumentenlage eine weitere geometrische Form, insbesondere eine Freiform, aufweist. Die geometrische Form der weiteren Dokumentenlage und auch die Dicke kann insbesondere derart gewählt werden, dass durch das Fügen die gewünschte Informationsänderung erfolgt. Somit kann eine geometrische Ausbildung, insbesondere eine geometrische Ausbildung der Umrandung, der weiteren Dokumentenlage durch Simulation oder Versuche bestimmt werden.

In einer weiteren Ausführungsform weist die erste Dokumentenlage mindestens einen bedruckten Bereich auf. Somit kann die erste Dokumentenlage als vorhergehend erläuterte Drucklage ausgebildet sein. Weiter werden die Dokumentenlagen zur Herstellung des ungefügten Lagenverbunds derart relativ zueinander angeordnet, dass der verdickte oder verdünnte Teilbereich zumindest einen Teilbereich des bedruckten Bereichs umfasst. Beispielsweise kann weitere Dokumentenlage über oder unter zumindest einem Teilbereich des bedruckten Bereichs angeordnet werden. Hierbei kann eine (maximale) Breite der weiteren Dokumentenlage kleiner als eine oder gleich einer maximale(n) Breite des bedruckten Bereichs sein. Alternativ oder kumulativ kann eine (maximale) Länge der weiteren Dokumentenlage kleiner als eine oder gleich einer maximale(n) Länge des bedruckten Bereichs sein. Mit anderen Worten kann die weitere Dokumentenlage in einer gemeinsamen Projektionsebene, die senkrecht zur Vertikalrichtung orientiert sein kann, innerhalb des bedruckten Bereichs angeordnet sein. Hierbei kann die Fläche der weiteren Dokumentenlage in der gemeinsamen Projektionsebene kleiner als die oder gleich der Fläche des bedruckten Bereichs sein. Allerdings ist es auch vorstellbar, dass die Fläche der weiteren Dokumentenlage in der gemeinsamen Projektionsebene größer als die Fläche des bedruckten Bereichs ist, wobei der bedruckte Bereich in der gemeinsamen Projektionsebene innerhalb der weiteren Dokumentenlage angeordnet ist.

In diesem Fall kann also bei dem Fügen eine Materialverdrängung in zumindest einem Teilbereich des bedruckten Bereichs erfolgen. Hierdurch wiederum kann die gedruckte Information verändert werden. Insbesondere kann eine Repräsentation und somit ein Erscheinungsbild der gedruckten Information durch das Fügen verändert werden.

Vorzugsweise kann zumindest ein Teil der Information geometrisch transformiert werden. Die geometrische Transformation kann eine definierte, insbesondere vorbestimme, geometrische Transformation sein.

In dem bedruckten Bereich kann insbesondere eine erfassbare, insbesondere eine optisch erfassbare, weiter insbesondere eine maschinell und/oder visuell erfassbare, gedruckte Information enthalten oder vorhanden sein. Beispielsweise kann die Information eine bildbasiert erfassbare Information sein. Hierzu kann es notwendig sein, ein Abbild des bedruckten Bereichs zu erzeugen. Allerdings kann die gedruckte Information auch eine von einem Menschen visuell erfassbare Information sein.

Somit ergibt sich in vorteilhafter Weise durch die Anordnung der weiteren Dokumentenlage, dass eine gedruckte und somit einfach erfassbare Information beim Fügen verändert werden kann. Somit ist auch eine Veränderung der Information leicht erfassbar. Insbesondere kann die gedruckte Information nach dem Fügen ein verändertes Erscheinungsbild aufweisen. Auf Grundlage dieser Veränderung kann, wie vorhergehend erläutert, eine Echtheitsprüfung, insbesondere eine Verifikation, des Dokuments erfolgen.

In einer bevorzugten Ausführungsform ist in dem bedruckten Bereich ein Lichtbild oder ein Teil davon gedruckt. Das Lichtbild kann hierbei mit einem Offsetdruck- oder einem Inkjet-Druckverfahren gedruckt werden. Selbstverständlich sind auch weitere Druckverfahren anwendbar.

Das Lichtbild kann insbesondere ein Abbild der Person sein, die zur Führung des Dokuments autorisiert ist. Hierbei kann das Lichtbild in einem Soll-Erscheinungsbild die Bestimmung eines Werts von mindestens einem biometrischen Merkmals ermöglichen.

Wie vorhergehend erläutert, kann ein Sollwert oder Sollwertbereich des biometrischen Merkmals dann beispielsweise ebenfalls in anderer Form in oder auf dem Dokument codiert sein, beispielsweise in einer elektrischen oder elektronischen Speichereinrichtung des Dokuments. Eine solche Speichereinrichtung kann z.B. mittels kabelloser Verfahren ausgelesen werden kann, beispielsweise über RFID-basierte Verfahren.

Auch kann ein Soll-Wert des biometrischen Merkmals bestimmt werden, indem ein Gesichtsbild der zur Führung des Dokuments autorisierten Person erzeugt wird, z.B. mittels einer Bilderfassungseinrichtung, wobei in Abhängigkeit des erzeugten Gesichtsbilds der Sollwert des biometrischen Merkmals bestimmt wird.

Beispielsweise kann als biometrisches Merkmal ein Augenabstand, der auch als Pupillenabstand bezeichnet werden kann, bestimmt werden. Beispielsweise kann ein Sollwertbereich eines Augenabstands in einem Bereich von 50 mm bis 75 mm liegen. Hierdurch ergibt sich in vorteilhafter Weise eine besonders zuverlässige Echtheitsprüfung einer durch das Fügen veränderbaren Information und somit eine erhöhte Fälschungssicherheit.

Erfindungsgemäß werden die Dokumentenlagen im ungefügten Lagenverbund derart relativ zueinander angeordnet, dass zumindest ein Teilbereich des Lagenverbunds durch das Fügen derart verformt wird, dass eine Information im oder auf dem ungefügten Lagenverbund verändert, insbesondere gezielt verändert, wird. Die Information kann hierbei in oder auf einem verdickten oder verdünnten Teilbereich des Lagenverbunds enthalten sein.

Die Information im oder auf dem ungefügten Lagenverbund kann eine lagespezifische Information der ersten oder weiteren Dokumentenlage oder eine durch die Zusammensetzung beider Dokumentenlagen bereitgestellte Information sein.

Zusätzlich zur relativen Anordnung kann es auch erforderlich sein, die Eigenschaften der Dokumentenlagen, insbesondere deren Materialeigenschaften und/oder geometrische Eigenschaften, und/oder Fügeparameter des Fügens derart zu wählen, dass die gezielte Veränderung erreicht wird.

Insbesondere kann die Information im oder auf dem ungefügten Lagenverbund eine von einer Soll-Information abweichende Information, insbesondere eine von einer Soll-Repräsentation abweichende Repräsentation, sein. Diese kann durch das Fügen in eine Soll-Information, insbesondere in eine Soll-Repräsentation, verändert werden. Eine von der Soll-Information abweichende Information kann insbesondere auch als verzerrte Information bezeichnet werden. Eine Soll-Information kann auch als entzerrte Information bezeichnet werden. Ein Informationsgehalt einer verzerrten Information kann um mehr als ein vorbestimmtes Maß von einem Soll-Informationsgehalt abweichen oder außerhalb eines zulässigen Bereichs eines Informationsgehalts liegen. Der Soll-Informationsgehalt bzw. der Bereich kann vorbekannt oder bestimmbar sein.

Umfasst die Repräsentation der Information beispielsweise ein Schriftzeichen einer vorbestimmten Schriftart mit einer vorbestimmten Schriftgröße, so kann die Soll-Repräsentation des Schriftzeichens, also ein Soll-Erscheinungsbild, vorbekannte Eigenschaften aufweisen. Eine verzerrte Repräsentation kann hierbei von den Soll-Eigenschaften abweichende Eigenschaften aufweisen. Eine entzerrte Repräsentation kann hierbei von die Soll-Eigenschaften aufweisen.

Ermöglicht die Repräsentation der Information die Bestimmung eines Werts eines Merkmals, insbesondere eines biometrischen Merkmalen, so kann ein Sollwert oder ein Sollwertbereich, wie vorhergehend erläutert, vorbekannt oder bestimmbar sein. Eine verzerrte Repräsentation der Information kann in diesem Fall eine Repräsentation bezeichnen, die die Bestimmung eines Werts des Merkmals ermöglicht, der mehr als ein vorbestimmtes Maß von dem Sollwert abweicht oder außerhalb des Sollwertbereichs liegt.

Hierdurch ergibt sich in vorteilhafter Weise eine erhöhte Fälschungssicherheit, da ein Fälscher eine gewünschte Repräsentation einer Information nur dann erzeugen kann, wenn er Informationen über relative Anordnung der Dokumentenlagen sowie gegebenenfalls über Eigenschaften der Dokumentenlage sowie der Fügeparameter verfügt. Gelangt also ein Fälscher z.B. in Besitz der ersten Dokumentenlage, beispielsweise in Form eines Rohlings, so ist das Herstellen des gewünschten Dokuments nur in erschwerter Weise möglich.

In einer weiteren Ausführungsform erfolgt die Veränderung der Information durch eine geometrische Transformation zumindest eines Teilbereichs. Insbesondere kann hierdurch eine grafische Repräsentation der Information, also ihr Erscheinungsbild, verändert werden.

Die geometrische Transformation kann hierbei durch das Fügen, insbesondere durch die Materialverschiebung, bedingt sein. Die geometrische Transformation kann insbesondere eine vordefinierte geometrische Transformation sein. Eine geometrische Transformation kann hierbei entsprechend einer vorbestimmten Transformationsvorschrift, insbesondere einer Vorschrift einer affinen oder bilinearen Transformation, erfolgen. Durch eine geometrische Transformation kann insbesondere eine Stauchung und/oder eine Streckung und/oder eine Translation und/oder eine Rotation und/oder eine Spiegelung und/oder eine Skalierung und/oder eine Scherung der Information erfolgen.

Durch eine geometrische Transformation kann eine Raumlage, also eine Position und/oder eine Orientierung, der Information oder eines Teilbereichs, in dem die

Information vorhanden ist, verändert werden. Mit anderen Worten erfolgt durch das Fügen eine gezielte Verformung eines Teilbereiches der ersten Dokumentenlage und/oder der weiteren Dokumentenlage.

Die geometrische Transformation kann insbesondere derart erfolgen, dass ein von dem Soll-Erscheinungsbild abweichendes Erscheinungsbild durch das Fügen in das Soll-Erscheinungsbild transformiert wird. Beispielsweise kann in dem ungefügten Lagenverbund eine grafische Information mit einem verzerrten Erscheinungsbild vorhanden sein, wobei das Erscheinungsbild durch das Fügen entzerrt wird. Das verzerrte Erscheinungsbild kann z.B. ein verzerrtes Zeichen oder ein verzerrtes Lichtbild sein.

Die Veränderung in Form einer geometrischen Information ermöglicht in vorteilhafter Weise eine einfachere Her- oder Bereitstellung der ersten und/oder weiteren Dokumentenlage mit einer verzerrten Information, da aufgrund der vorbekannten Transformation die Information derart in die erste und/oder weitere Dokumentenlage eingebracht werden kann, dass durch ein nachträgliches Fügen eine entzerrte Information erzeugt wird.

In einer weiter bevorzugten Ausführungsform wird eine Information im oder auf dem ungefügten Lagenverbund, die von einer Soll-Information verschieden ist, durch das Fügen in die Soll-Information verändert. Mit anderen Worten kann eine von der Soll-Repräsentation abweichende Repräsentation der Information durch das Fügen in die Soll-Repräsentation verändert. Mit noch anderen Worten kann eine verzerrte Information durch das Fügen entzerrt werden. Dies und entsprechende Vorteile wurden vorhergehend erläutert.

Insbesondere kann die Information im oder auf dem ungefügten Lagenverbund eine gegenüber der Soll-Information geometrisch transformierte Information sein. Insbesondere kann die Repräsentation der Information im oder auf dem ungefügten Lagenverbund also durch eine geometrische Transformation der Soll-Repräsentation bestimmbar sein. Durch das Fügen kann eine Rücktransformation erfolgen. Mit anderen Worten können die Dokumentenlagen derart relativ zueinander angeordnet werden, dass zumindest ein Teilbereich des Lagenverbunds derart verformt wird, dass die Information im oder auf dem ungefügten Lagenverbund in eine Soll-Informationen rücktransformiert wird.

Zur Bestimmung der Repräsentation der Information im oder auf dem ungefügten Lagenverbund für eine Herstellungsphase kann in einer Bestimmungsphase entsprechend den vorhergehenden Erläuterungen ein ungefügter Lagenverbund mit einer Soll-Repräsentation der Information bereitgestellt werden. Dann kann der Lagenverbund, insbesondere mit festgelegten Fügeparametern gefügt werden.

Nach dem Fügen kann die nunmehr durch das Fügen veränderte Repräsentation der Information erfasst und eine Abweichung von der ursprünglichen Soll-Repräsentation bestimmt werden, beispielsweise bildbasiert. Dann kann mindestens ein Parameter einer geometrischen Transformation, die auch als Hintransformation bezeichnet werden kann, bestimmt werden, durch die die Soll-Repräsentation durch das Fügen in die veränderte Repräsentation transformiert wurde.

In Abhängigkeit der derart bestimmten Hintransformation kann dann eine Rücktransformation bestimmt werden, beispielsweise als eine zur Hintransformation inverse Transformation.

Für eine Herstellungsphase kann dann ein ungefügter Lagenverbund mit einer rücktransformierten Repräsentation der Information bereitgestellt werden, wobei die rücktransformierte Repräsentation eine Repräsentation bezeichnet, die durch eine geometrische Transformation der Soll-Repräsentation entsprechend der in der Bestimmungsphase bestimmten Rücktransformation bestimmt wurde.

Durch das Fügen während der Herstellung wird dann die rücktransformierte Repräsentation wieder in die Soll-Repräsentation transformiert.

Beispielsweise kann die abweichende Repräsentation durch eine Bilderfassungseinrichtung erfasst werden, wobei eine Recheneinrichtung den mindestens einen Transformationsparameter sowie die entsprechende Rücktransformation bestimmt. Weiter kann die Recheneinrichtung eine Einrichtung zur Ein- oder Aufbringung der Information, beispielsweise eine Druckeinrichtung, derart ansteuern, dass die Information in entsprechend rücktransformierter Weise in oder auf einer der Dokumentenlagen ein- oder aufgebracht wird.

Hierdurch ergibt sich in vorteilhafter Weise eine leicht durchführbare Verifikation des hergestellten Dokuments mit erhöhter Fälschungssicherheit, insbesondere da die Informationen nach dem Fügen in einer Soll-Repräsentation vorliegen, die einfach von einem entsprechenden Verifikationssystem oder einem Nutzer ausgewertet werden kann. So kann beispielsweise in einfacher Weise verifiziert werden, ob ein Lichtbild in einer von der Soll-Repräsentation abweichenden Repräsentation in dem Dokument vorhanden ist.

In einer weiteren Ausführungsform weist der Lagenverbund nach dem Fügen eine sich verändernde Dichte auf.

Insbesondere kann der Lagenverbund nach dem Fügen in einem vorbestimmten Teilbereich eine Dichte aufweisen, die höher oder niedriger als eine mittlere Dichte des Lagenverbundes ist. Alternativ oder kumulativ kann ein Teilbereich einen Teilbereich bezeichnen, in dem eine Dichte höher oder geringer ist als in einem benachbarten Teilbereich des gefügten Lagenverbunds oder als in einem Bereich außerhalb des Teilbereichs. Insbesondere kann ein Dichte des gefügten Lagenverbunds bei einem Übergang zu einem Teilbereich zu- oder abnehmen, z.B. sprungartig oder linear oder stetig. Eine Dichte in einem solchen Teilbereich kann um mehr als einen vorbestimmten Prozentsatz höher oder geringer als eine mittlere Dichte des gefügten Lagenverbunds sein, z.B. um mehr als 10%.

Hierbei kann der Teilbereich des gefügten Lagenverbunds mit einer höheren oder niedrigeren Dichte ein Teilbereich des Lagenverbunds sein, der vor dem Fügen ein verdickter oder verdünnter Teilbereich des ungefügten Lagenverbunds war, einen solchen verdickten oder verdünnten Teilbereich umfasste oder von einem solchen Teilbereich umfasst wurde.

Der vorbestimmte Teilbereich mit höherer oder niedrigerer Dichte kann hierbei eine vorbestimmte geometrische Form aufweisen. Beispielsweise kann der Teilbereich einen rechteckförmigen, kreisförmigen oder ovalen Randverlauf aufweisen, insbesondere in einer Querschnittsebene, die senkrecht zur erläuterten Vertikalrichtung orientiert ist.

Durch die sich verändernde Dichte kann insbesondere ein Wasserzeichen bereitgestellt werden. Ein Wasserzeichen kann insbesondere bei einer Durchlichtbeleuchtung detektiert werden, beispielsweise visuell durch einen Nutzer oder durch eine entsprechend ausgebildete Erfassungseinrichtung. Mit anderen Worten wird durch das Fügen eines Lagenverbundes mit sich verändernder Dichte ein Wasserzeichen erzeugt.

Hierdurch ergibt sich in vorteilhafter Weise eine weiter erhöhte Fälschungssicherheit. Insbesondere kann nach dem Fügen eine Dichte des hergestellten Dokuments bestimmt werden, insbesondere eine räumliche Dichteverteilung. In Abhängigkeit von Eigenschaften der ersten und der weiteren Dokumentenlage sowie der relativen Anordnung der Dokumentenlagen vor dem Fügen relativ zueinander kann durch das Fügen gezielt ein Teilbereich mit einer vorbestimmten Dichte und gegebenenfalls einer vorbestimmten geometrischen Form hergestellt werden. Weist das fertig hergestellte Dokument einen derartigen Teilbereich auf, so kann das Dokument verifiziert werden.

Weiter vorgeschlagen wird eine Vorrichtung zur Herstellung eines Dokuments, insbesondere eines Sicherheitsdokuments. Die Vorrichtung dient hierbei zur Durchführung eines Verfahrens gemäß einer der in dieser Offenbarung erläuterten Ausführungsformen. Insbesondere ist die Vorrichtung derart ausgebildet, dass ein solches Verfahren mittels der Vorrichtung durchführbar ist.

Die Vorrichtung umfasst eine erste Einrichtung zur Positionierung einer ersten Dokumentenlage. Durch die Einrichtung zur Positionierung kann insbesondere eine Raumlage, also eine Position und/oder Orientierung, der ersten Dokumentenlage verändert werden. Die Einrichtung zur Positionierung kann beispielsweise ein Förderband sein oder ein solches Förderband umfassen.

Alternativ oder kumulativ umfasst die Vorrichtung eine weitere Einrichtung zur Positionierung einer Dokumentenlage, insbesondere der weiteren Dokumentenlage.

Durch die Einrichtung(en) zur Positionierung kann eine gewünschte Relativlage zwischen den beiden Dokumentenlagen hergestellt werden. Insbesondere kann mittels der Einrichtung(en) zur Positionierung die weitere Dokumentenlage unter oder über der ersten Dokumentenlage angeordnet werden, insbesondere in einer gewünschten Relativlage.

Weiter umfasst die Vorrichtung eine Fügeeinrichtung.

Es ist vorstellbar, dass die Vorrichtung weiter eine Einrichtung zur (Vor-)Befestigung der weiteren Dokumentenlage an der ersten Dokumentenlage umfasst. Diese kann beispielsweise als Einrichtung zum Ultraschall-Heften ausgebildet sein.

Somit ist die mindestens eine weitere Dokumentenlage mittels der vorgeschlagenen Vorrichtung über oder unter der ersten Dokumentenlage anordenbar, insbesondere in einer gewünschten Relativlage.

Erfindungsgemäß sind die Dokumentenlagen derart relativ zueinander anordenbar, dass ein ungefügter Lagenverbund, der aus der ersten und der weiteren Dokumentenlage bereitgestellt wird, mindestens einen verdickten oder verdünnten Teilbereich aufweist.

Weiter kann auch mindestens eine der Dokumentenlagen derart ausgebildet sein, dass der ungefügte Lagenverbund in einer gewünschten Relativanordnung mindestens einen verdickten oder verdünnten Teilbereich, insbesondere mit einer gewünschten geometrischen Ausbildung und/oder in einer gewünschten Position, aufweist.

Weiter ist ein Fügen des Lagenverbunds durchführbar, insbesondere mittels der Fügeeinrichtung, insbesondere eine Laminier- oder Kaschiereinrichtung.

Durch die Vorrichtung ergibt sich in vorteilhafter Weise, dass ein Verfahren gemäß einer der in dieser Offenbarung erläuterten Ausführungsformen duchführbar ist und somit ein Dokument mit verbesserter Fälschungssicherheit hergestellt werden kann. Dies wurde vorhergehend bereits erläutert.

In einer weiteren Ausführungsform umfasst die Vorrichtung mindestens eine Einrichtung zur Anordnung einer erfassbaren Information in oder auf der ersten und/oder der weiteren Dokumentenlage auf. Die Information kann beispielsweise eine gedruckte Information sein. Diese kann beispielsweise mindestens ein Schrittzeichen oder ein grafisch darstellbares Symbol und/oder ein (Teil eines) Lichtbild(es) umfassen. Die Einrichtung zur Anordnung kann beispielsweise eine Druckeinrichtung sein. Selbstverständlich können jedoch auch andere Einrichtungen, beispielsweise Prägeeinrichtungen, genutzt werden, um eine erfassbare Information in oder auf einer der Dokumentenlagen anzuordnen. Insbesondere kann die Information in einer verzerrten Repräsentation in oder auf einer Dokumentenlage angeordnet werden. Dies wurde vorhergehend bereits erläutert. Durch das Vorsehen der Einrichtung zur Anordnung einer erfassbaren Information ergibt sich in vorteilhafter Weise eine einfachere Herstellung eines Dokuments mit erhöhter Fälschungssicherheit.

Weiter erfindungsgemäß umfasst die Vorrichtung mindestens eine Recheneinrichtung zur Berechnung einer Anordnung der Information auf oder in der ersten Dokumentenlage und/oder weiteren Dokumentenlage derart, dass durch das Fügen eine Soll-Information erzeugt wird. Insbesondere kann eine unverzerrte Repräsentation der Information durch das Fügen erzeugt werden. Dies und entsprechende Vorteile wurden vorhergehend bereits erläutert. Die Recheneinrichtung kann hierbei als Mikrocontroller ausgebildet sein oder einen solchen umfassen.

Weiter beschrieben wird ein Dokument. Das Dokument kann insbesondere durch ein Verfahren gemäß einer der in dieser Offenbarung erläuterten Ausführungsformen hergestellt werden. Auch kann das Dokument durch eine Vorrichtung gemäß einer der in dieser Offenbarung erläuterten Ausführungsformen herstellbar sein.

Das Dokument weist eine sich verändernde Dichte auf, die durch ein Fügen einer ersten und mindestens einer weiteren Dokumentenlage erzeugt wird. Dies und entsprechende Vorteile wurden vorhergehend bereits erläutert.

Alternativ oder kumulativ weist das Dokument eine erfassbare Information auf, die durch Fügen der ersten und mindesten einen weiteren Dokumentenlage geometrisch transformiert wurde, insbesondere von einer Repräsentation, die von einer Soll-Repräsentation abweicht, in die Soll-Repräsentation. Insbesondere kann das Dokument mindestens eine Dokumentenlage mit einem bedruckten Bereich aufweisen. Hierbei kann vor dem Fügen der bedruckte Bereich in einer Ebene der Dokumentenlage angeordnet sein, beispielsweise auf einer Oberseite oder auf einer Unterseite der Dokumentenlage. Nach dem Fügen kann sich eine Dimension dieser Ebene, insbesondere eine Länge, eine Breite und/oder eine Dicke dieser Ebene, verändern. Beispielsweise können Informationen, die auf eine Ober- oder Unterseite der ersten Dokumentenlage gedruckt wurden, durch das Fügen in den Dokumentenkörper hinein verdrängt werden.

Die Erfindung wird anhand eines Ausführungsbeispiels näher erläutert. Die Figuren zeigen:
- Fig. 1: einen schematischen Querschnitt durch einen Lagenverbund vor einem Fügen gemäß einer ersten Ausführungsform,
- Fig. 2: einen schematischen Querschnitt durch einen Lagenverbund vor einem Fügen gemäß einer weiteren Ausführungsform,
- Fig. 3: einen schematischen Querschnitt durch einen Lagenverbund nach einem Fügen,
- Fig. 4: eine schematische Draufsicht auf ein Lagenverbund vor einem Fügen,
- Fig. 5: eine schematische Draufsicht auf den in Fig. 4 dargestellten Lagenverbund nach einem Fügen,
- Fig. 6: eine schematische Draufsicht auf einen Lagenverbund nach einem Fügen gemäß einer weiteren Ausführungsform,
- Fig. 7: ein schematisches Flussdiagramm eines erfindungsgemäßen Verfahrens,
- Fig. 8: ein weiteres schematisches Flussdiagramm eines erfindungsgemäßen Verfahrens und
- Fig. 9: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

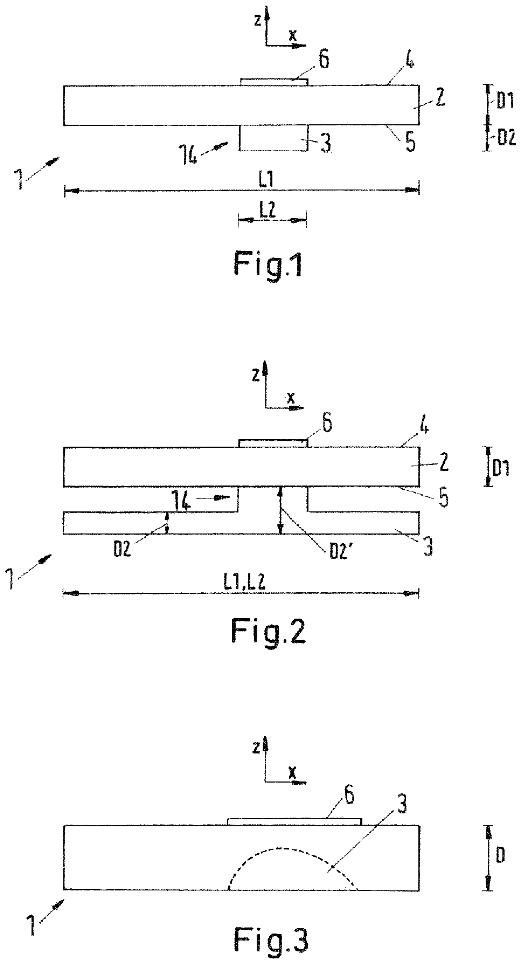

In Fig. 1 ist ein schematischer Querschnitt durch einen ungefügten Lagenverbund 1 vor einem Fügen, insbesondere vor einer Lamination, dargestellt. Der Lagenverbund 1 kann ein erfindungsgemäß hergestelltes Dokument oder ein Teil eines solchen Dokuments sein. Der Lagenverbund 1 umfasst eine erste Dokumentenlage 2 und eine weitere Dokumentenlage 3. Weiter dargestellt ist, dass auf einer Oberseite 4 der ersten Dokumentenlage 2 ein bedruckter Bereich 5 angeordnet ist. Weiter dargestellt ist eine Vertikalrichtung z und eine Longitudinalrichtung x eines dokumentenfesten Koordinatensystems bzw. eines dokumentenlagenfesten Koordinatensystems.

Die weitere Dokumentenlage 3 ist an einer Unterseite 5 der ersten Dokumentenlage 2 angeordnet. Hierbei liegt eine Oberseite der weiteren Dokumentenlage 3 an dieser Unterseite 5 an.

Hierbei ist dargestellt, dass eine Dicke D1 der ersten Dokumentenlage 2 entlang der Vertikalrichtung z in einem Bereich von 400 bis 600 µm liegen kann. Eine Dicke D2 der weiteren Dokumentenlage 3 kann ebenfalls in dem genannten Bereich liegen.

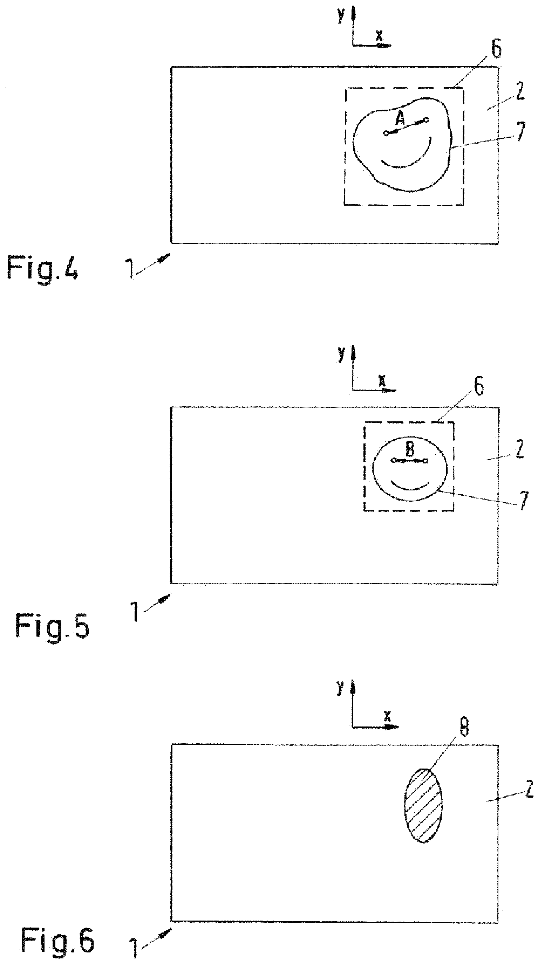

Weiter dargestellt ist, dass eine Länge L1 der weiteren Dokumentenlage 3 entlang der Longitudinalrichtung x kleiner als eine Länge L2 der ersten Dokumentenlage 2 ist. Nicht dargestellt ist, dass eine Breite der weiteren Dokumentenlage 3 entlang einer Lateralrichtung y (siehe Fig. 4) ebenfalls kleiner als eine Breite der ersten Dokumentenlage 2 sein kann. Die Lateralrichtung y kann hierbei mit der Vertikalrichtung z und der Longitudinalrichtung x einen rechten Winkel einschließen, wobei das aus den Richtungen x, y, z bestehende Koordinatensystem ein kartesisches Koordinatensystem sein kann.

Die weitere Dokumentenlage 3 kann aus einem vorbestimmten Material, insbesondere aus PC oder PET, bestehen. Die erste Dokumentenlage 2 kann ebenfalls aus einem vorbestimmten Material, beispielsweise PC oder PET, bestehen.

In Fig. 1 ist dargestellt, dass die weitere Dokumentenlage 3 streifenförmig ausgebildet ist. Selbstverständlich kann die weitere Dokumentenlage 3 auch eine davon abweichende geometrische Form aufweisen.

Der ungefügte Lagenverbund 1 weist eine sich verändernde Dicke auf. Die Dicke verändert sich hierbei entlang der Longitudinalrichtung x und der Lateralrichtung y. Insbesondere weist der ungefügte Lagenverbund 1 einen verdickten Teilbereich 14 auf. Dieser wird durch den Teilbereich gebildet, in dem die weitere Dokumentenlage 3 an der Unterseite 5 der ersten Dokumentenlage 2 angeordnet ist. Insbesondere ist die Dicke des Lagenverbunds in dem Bereich, in dem die weitere Dokumentenlage 3 an der Unterseite 5 der ersten Dokumentenlage 2 angeordnet ist, größer als in den Bereichen, in denen keine weitere Dokumentenlage 3 an der Unterseite 5 oder der Oberseite 4 der ersten Dokumentenlage 2 angeordnet ist.

Die Dicke des ungefügten Lagenverbunds 1 im verdickten Teilbereich 14 entspricht hierbei der Summe der Dicke D1, D2 der ersten Dokumentenlage 2 und der weiteren Dokumentenlage 3. Außerhalb des verdickten Teilbereichs 14 entspricht die Dicke des Lagenverbunds 1 der Dicke D1 der ersten Dokumentenlage 2.

In Fig. 2 ist ein schematischer Querschnitt durch ein Lagenverbund 1 in einer weiteren Ausführungsform dargestellt. Hierbei ist dargestellt, dass die weitere Dokumentenlage 3 entlang der Vertikalrichtung z eine sich verändernde Dicke auf. Insbesondere weist die weitere Dokumentenlage 3 einen verdickten Teilbereich mit einer Dicke D2' auf, die sich von größer als eine Dicke D2 der weiteren Dokumentenlage 3 außerhalb dieses verdickten Teilbereichs ist. Weiter kann die weitere Dokumentenlage 3 die gleiche Länge L und die gleiche Breite wie die erste Dokumentenlage 2 aufweisen. Weiter dargestellt ist, dass die weitere Dokumentenlage 3 an der Unterseite 5 der ersten Dokumentenlage 2 angeordnet ist. Hierbei wird ein verdickter Teilbereich 14 des ungefügten Lagenverbunds 1 durch den Teilbereich gebildet, in dem der verdickte Bereich der weiteren Dokumentenlage 3 an der Unterseite 5 der ersten Dokumentenlage 2 angeordnet ist.

Sowohl in Fig. 1 als auch in Fig. 2 ist dargestellt, dass ein bedruckter Bereich 6 im verdickten Bereich 14, insbesondere auf der Oberseite 4 der ersten Dokumentenlage 2 in diesem verdickten Bereich 14, des ungefügten Lagenverbunds 1 angeordnet ist.

Weiter wird der ungefügte Lagenverbund 1, der in Fig. 1 oder Fig. 2 schematisch dargestellt ist, gefügt, insbesondere laminiert.

In Fig. 3 ist ein schematischer Querschnitt durch einen gefügten Lageverbund 1, also einen Lagenverbund nach dem Fügen, dargestellt. Der in Fig. 3 dargestellte Lagenverbund 1 kann insbesondere durch ein Fügen des in Fig. 1 dargestellten ungefügten Lagenverbunds 1 mit festgelegten Fügeparametern hergestellt werden. Dargestellt ist, dass der Lagenverbund 1 nach dem Fügen eine konstante Dicke D aufweist. Durch Strichlinien gekennzeichnet ist ein Teilbereich des Lagenverbunds, der durch das Eindringen der weiteren Dokumentenlage 3 in die erste Dokumentenlage 2 erzeugt wird. Die Darstellung ist nur schematisch und dient der Visualisierung einer Materialverdrängung von Material der ersten Dokumentenlage 2 durch Material der weiteren Dokumentenlage 3 in dem vor dem Fügen verdickten Teilbereich 14.

Durch das Eindringen der weiteren Dokumentenlage 3 in die erste Dokumentenlage 2 beim Fügen kann eine Materialverdrängung in einem Teilbereich der ersten Dokumentenlage 2 erfolgen, insbesondere in einem Teilbereich, der entlang der Vertikalrichtung z unterhalb des bedruckten Bereiches 6 liegt. Das Material kann hierbei in oder entgegen der Lateralrichtung y und/oder in oder entgegen der Longitudinalrichtung x verdrängt werden.

Die Materialverdrängung kann hierbei dazu führen, dass eine Größe des bedruckten Bereichs 6 verändert wird. Auch kann eine Raumlage von Teilbereichen des bedruckten Bereichs 6 verändert werden. Somit wird auch die in dem bedruckten Teilbereich 6 vorhandene Information verändert.

Insbesondere kann eine grafische Repräsentation, also ein Erscheinungsbild, einer Information, die in dem bedruckten Bereich 6 vorhanden ist, durch das Fügen verändert werden. Insbesondere kann die Veränderung durch eine geometrische Transformation der Repräsentation beschrieben werden.

Dies kann bedeuten, dass eine gedruckte Information, insbesondere ein grafisches Zeichen, ein Schriftzeichen oder ein Lichtbild oder ein Teil davon, durch die Materialverdrängung geometrisch transformiert wird. Insbesondere kann eine Skalierung, Scherung, Streckung oder Stauchung des bedruckten Bereiches 6 und somit der grafischen Repräsentation der Information erfolgen.

Die durch das Fügen und die damit einhergehende Materialverschiebung erzeugte geometrische Transformation kann eine gezielte Transformation sein. So kann in Abhängigkeit von Eigenschaften der Dokumentenlagen 2, 3, insbesondere eines Materials und einer geometrischen Form der Dokumentenlage 2, 3, in Abhängigkeit von Fügeparametern, insbesondere einer Temperatur und eines Druckes sowie einer Zeitdauer, sowie in Abhängigkeit der Relativlage der Dokumentenlagen 2, 3 in dem ungefügten Lagenverbund 1 eine gewünschte geometrische Transformation der im bedruckten Bereich 6 vorhandenen grafischen Repräsentation einer Information erfolgen.

Die geometrische Transformation kann hierbei derart erfolgen, dass eine gewünschte Soll-Repräsentation der Information nach dem Fügen hergestellt ist. Insbesondere kann die Repräsentation der in dem bedruckten Bereich 6 vor dem Fügen von der gewünschten Soll-Repräsentation abweichen. Nach dem Fügen kann die durch das Fügen veränderte Repräsentation der Information der gewünschten Soll-Repräsentation entsprechen oder nicht mehr als ein vorbestimmtes Maß davon abweichen.

Dies wird anhand der Fig. 4 und Fig. 5 näher erläutert. In Fig. 4 ist eine schematische Draufsicht auf einen Lageverbund 1, insbesondere auf eine erste Dokumentenlage 2, vor dem Fügen dargestellt. Hierbei ist schematisch der bedruckte Bereich 6 dargestellt, in dem ein Lichtbild 7 auf die erste Dokumentenlage 2 aufgedruckt ist. Das Lichtbild 7 ist hierbei verzerrt aufgedruckt. Nicht dargestellt ist die weitere Dokumentenlage 3 (siehe z.B. Fig. 1), die unter dem bedruckten Bereich 6 oder unter einem Teilbereich des bedruckten Bereichs 6 angeordnet ist.

Mit anderen Worten weicht die erfassbare, insbesondere visuell erfassbare, Repräsentation des Lichtbildes des Lichtbildes 7 von einer Soll-Repräsentation ab. Beispielsweise kann in der verzerrten Repräsentation des Lichtbildes 7 ein Abstand A zwischen den Augen des durch das Lichtbild 7 dargestellten Gesichts außerhalb eines vorbestimmten Bereichs zulässiger Abstände liegen.

Durch ein Fügen, insbesondere eine Lamination, kann aus dem in Fig. 4 dargestellten Lagenverbund 1 der in Fig. 5 dargestellte gefügte Lagenverbund 1 hergestellt werden, wobei wiederum eine schematische Draufsicht auf den Lagenverbund 1, insbesondere die erste Dokumentenlage 2, dargestellt ist. Hierbei ist dargestellt, dass in dem bedruckten Bereich 6 nunmehr eine entzerrte Repräsentation, also eine Soll-Repräsentation, des Lichtbildes 7 vorhanden ist. Durch das Fügen und die damit einhergehende Materialverschiebung/-verdrängung erfolgt eine geometrische Transformation zumindest eines Teils des bedruckten Bereichs 6 und insbesondere des in diesem Teil aufgedruckten Lichtbilds 7. Der transformierte Abstand B zwischen den Augen des Gesichts liegt nunmehr in einem Bereich zulässiger Abstände.

Insbesondere ist somit die erste Dokumentenlage 2 und die weitere Dokumentenlage 3 derart ausgebildet sowie wird die Anordnung der ersten Dokumentenlage 2 relativ zur weiteren Dokumentanlage 3 vor dem Fügen derart gewählt, dass durch das Fügen eine gewünschte geometrische Transformation der grafischen Repräsentation von Informationen, in diesem Falle des Lichtbilds 7, erfolgt. Insbesondere kann die geometrische Transformation derart erfolgen, dass eine Soll-Repräsentation der Information hergestellt wird, insbesondere aus einer von dieser Soll-Repräsentation abweichenden Repräsentation.

Fig. 6 zeigt eine schematische Draufsicht auf einen gefügten Lagenverbund 1 gemäß einer weiteren Ausführungsform. Hierbei dargestellt ist ein Teilereich 8, der eine geringere Dichte als ein Bereich des Lagenverbunds 1 außerhalb des Teilbereichs 8 aufweist. Dieser Teilbereich 8 ist insbesondere bei Durchlichtbeleuchtung optisch, insbesondere auch visuell, erfassbar. Hierbei ist dargestellt, dass der Teilbereich 8 eine ovale geometrische Ausbildung aufweist. Der Teilbereich 8 kann hierbei ein Teilbereich des gefügten Lagenverbunds 1 sein, der dem verdickten Bereich 14 des ungefügten Lagenverbunds 1 entspricht, der von diesem verdickten Bereich 14 umfasst wird oder der den verdickten Bereich 14 umfasst.

Somit kann durch das Bereitstellen eines verdickten Teilbereichs 14 des ungefügten Lagenverbunds durch das Fügen auch ein Teilbereich mit veränderter Dichte bereitgestellt werden. Dies kann ebenfalls zur Verifikation des Dokuments genutzt werden.

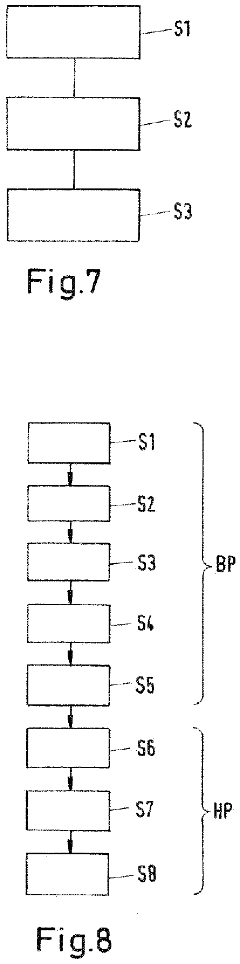

In Fig. 7 ist ein schematisches Flussdiagramm eines erfindungsgemäßen Verfahrens dargestellt. In einem ersten Verfahrensschritt S1 wird eine erste und eine weitere Dokumentenlage 2, 3 (siehe Fig. 1) bereitgestellt. In einem zweiten Verfahrensschritt S2 wird die weitere Dokumentenlage 3 über oder unter der ersten Dokumentenlage 2 in einer gewünschten relativen Anordnung zu der ersten Dokumentenlage 2 angeordnet. Hierbei kann die erste und/oder die weitere Dokumentenlage 2, 3 positioniert werden. Insbesondere können die Dokumentenlagen 2, 3 derart relativ zueinander angeordnet werden, dass der ungefügte Lagenverbund 1 in einem vorbestimmten Bereich 14 verdickt wird, also den verdickten Bereich 14 aufweist. Insbesondere kann der ungefügte Lagenverbund 1 in dem verdickten Bereich 14 eine Information enthalten oder aufweisen. In einem dritten Schritt S3 werden die erste und die weitere Dokumentenlage 2, 3 gefügt. Hierzu können vorbestimmte Fügeparameter, beispielsweise eine vorbestimmte Temperatur, ein vorbestimmter Druck sowie eine vorbestimmte Fügezeitdauer, eingestellt werden.

In Fig. 8 ist ein weiteres schematisches Flussdiagramm eines erfindungsgemäßen Verfahrens dargestellt.

Das Verfahren umfasst eine Bestimmungsphase BP und eine Herstellungsphase HP.

In einem ersten Verfahrensschritt S1 wird eine erste und eine weitere Dokumentenlage 2, 3 (siehe Fig. 1) bereitgestellt. Weiter wird im ersten Verfahrensschritt S1 eine erfassbare Information gemäß einer gewünschten Soll-Repräsentation auf oder in die erste Dokumentenlage 2 auf- oder eingebracht. In einem zweiten Schritt S2 wird, wie vorhergehend in Bezug auf den in Fig. 7 dargestellten zweiten Schritt S2 erläutert, die weitere Dokumentenlage 3 relativ zur ersten Dokumentenlage 2 angeordnet. In einem dritten Schritt S3 wird, wie vorhergehend in Bezug auf den in Fig. 7 dargestellten dritten Schritt erläutert, ein Fügen der ersten und weiteren Dokumentenlage 2, 3 durchgeführt.

In einem vierten Verfahrensschritt S4 wird eine durch das Fügen veränderte grafische Repräsentation einer Information, beispielsweise eines Lichtbilds 7 (siehe Fig. 5) erfasst. Weiter wird eine geometrische Transformation, insbesondere mindestens ein Transformationsparameter einer geometrischen Transformation, bestimmt, wobei die geometrische Transformation die Transformation beschreibt, mit der die in oder auf der ersten Dokumentenlage 2 vor dem Fügen vorhandene Repräsentation der Information in eine Repräsentation der Information nach dem Fügen transformiert werden kann. Diese Transformation kann auch als Hintransformation bezeichnet werden.

In einem fünften Schritt S5 wird eine inverse Transformation, die auch als Rücktransformation bezeichnet werden kann, bestimmt.

Die ersten fünf Schritte S1 ...S5 sind Schritte der Bestimmungsphase BP. Die ersten fünf Verfahrensschritt S1 bis S5 können somit vor dem erfindungsgemäßen Verfahren zur Herstellung eines Dokuments durchgeführt werden, um die Anordnung einer Repräsentation von Informationen auf oder in der ersten Dokumentenlage 2 zu bestimmen.

Der sechste, siebte und achte Schritt S6, S7, S8 sind Schritte der Herstellungsphase HP und entsprechen jeweils dem ersten Schritt S1, dem zweiten Schritt S2 und dem dritten Schritt S3, die in Fig. 7 dargestellt sind. Hierbei wird jedoch in dem sechsten Schritt S6 die erste Dokumentenlage 2 mit einer entsprechend der Rücktransformation transfomierten Soll-Repräsentation der Information bereitgestellt. Diese Repräsentation wird dann durch das Fügen im achten Schritt S8 wieder in die Soll-Repräsentation transformiert.

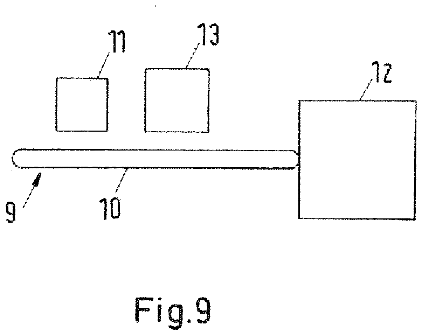

Fig. 9 zeigt ein schematisches Blockschaltbild einer erfindungsgemäßen Vorrichtung 9 zur Herstellung eines Dokuments. Die Vorrichtung 9 umfasst eine erste Einrichtung 10 zur Positionierung einer ersten Dokumentenlage 2 (siehe Fig. 1) und eine weitere Einrichtung zur Positionierung einer weiteren Dokumentenlage 3 (siehe Fig. 1). Hierbei ist die erste Einrichtung zur Positionierung 10 als Förderband ausgebildet oder umfasst ein solches Förderband. Weiter umfasst die erfindungsgemäße Vorrichtung 9 eine Fügeeinrichtung 12, insbesondere eine Laminiereinrichtung. Mittels der in Fig. 9 dargestellten Vorrichtung kann ein erfindungsgemäßes Verfahren durchgeführt werden. In Fig. 9 ist weiter dargestellt, dass die Vorrichtung 9 eine Einrichtung 13 zur Aufbringung einer Information in einer gewünschten Repräsentation auf oder in der ersten und/oder weiteren Dokumentenlage 2, 3 umfassen kann, beispielsweise eine Druckeinrichtung.

### Bezugszeichenliste

- 1: Lagenverbund
- 2: erste Dokumentenlage
- 3: weitere Dokumentenlage
- 4: Oberseite
- 5: Unterseite
- 6: bedruckter Bereich
- 7: Lichtbild
- 8: Teilbereich
- 9: Vorrichtung
- 10: Förderband
- 11: Richtung zur Positionierung
- 12: Fügeeinrichtung
- 13: Einrichtung zur Aufbringung von Informationen
- 14: verdickter Bereich
- x: Longitudinalrichtung
- y: Lateralrichtung
- z: Vertikalrichtung
- S1: erster Schritt
- S2: zweiter Schritt
- S3: dritter Schritt
- S4: vierter Schritt
- S5: fünfter Schritt
- S6: sechster Schritt
- S7: siebter Schritt
- S8: achter Schritt
- BP: Bestimmungsphase
- HP: Herstellungsphase
- D: Dicke des gefügten Lagenverbunds
- D1: Dicke der ersten Dokumentenlage
- D2: Dicke der weiteren Dokumentenlage
- D2': Dicke der weiteren Dokumentenlage

## Patentansprüche

1. Verfahren zur Herstellung eines Dokuments, wobei eine erste Dokumentenlage (2) und mindestens eine weitere Dokumentenlage (3) bereitgestellt werden, wobei die mindestens eine weitere Dokumentenlage (3) über oder unter der ersten Dokumentenlage (2) angeordnet wird, wobei die Dokumentenlagen (2, 3) derart relativ zueinander angeordnet werden, dass ein ungefügter Lagenverbund (1), der aus der ersten und der weiteren Dokumentenlage (2, 3) bereitgestellt wird, mindestens einen verdickten oder verdünnten Teilbereich (14) aufweist, wobei der Lagenverbund (1) gefügt wird,
**dadurch gekennzeichnet, dass**
die Dokumentenlagen (2, 3) im ungefügten Lagenverbund (1) derart relativ zueinander angeordnet werden, dass zumindest ein Teilbereich des Lagenverbunds (1) durch das Fügen derart verformt wird, dass eine Information im oder auf dem ungefügten Lagenverbund (1) verändert wird.

2. Verfahren nach Anspruch 1, **dadurch gekennzeichnet, dass** eine maximale Breite der weiteren Dokumentenlage (3) kleiner als eine maximale Breite der ersten Dokumentenlage (2) ist und/oder eine maximale Länge (L2) der weiteren Dokumentenlage (3) kleiner als eine maximale Länge (L1) der ersten Dokumentenlage (2) ist.

3. Verfahren nach einem der vorangegangenen Ansprüche, **dadurch gekennzeichnet, dass** die weitere Dokumentenlage (3) einen rechteckförmigen, einen kreisförmigen oder ovalen Randverlauf aufweist.

4. Verfahren nach einem der vorangegangenen Ansprüche, **dadurch gekennzeichnet, dass** die erste Dokumentenlage (2) mindestens einen bedruckten Bereich (6) aufweist, wobei die Dokumentenlagen (2, 3) im ungefügten Lagenverbund (2) derart relativ zueinander angeordnet werden, dass der verdickte oder verdünnte Teilbereich (14) zumindest einen Teilbereich des bedruckten Bereichs (6) umfasst.

5. Verfahren nach Anspruch 4, **dadurch gekennzeichnet, dass** in dem bedruckten Bereich (6) ein Lichtbild oder ein Teil davon gedruckt ist.

6. Verfahren nach einem der Ansprüche 1 bis 5, **dadurch gekennzeichnet, dass** die Veränderung der Information durch eine geometrische Transformation zumindest eines Teilbereichs des Lagenverbunds erfolgt.

7. Verfahren nach einem der Ansprüche 1 bis 6, **dadurch gekennzeichnet, dass** eine Information im oder auf dem ungefügten Lagenverbund (1), die von einer Soll-Information verschieden ist, durch das Fügen in die Soll-Information verändert wird.

8. Verfahren nach einem der vorangegangenen Ansprüche, **dadurch gekennzeichnet, dass** der Lagenverbund (1) nach dem Fügen eine sich verändernde Dichte aufweist.

9. Vorrichtung zur Herstellung eines Dokuments, wobei die Vorrichtung (9) eine erste Einrichtung (10) zur Positionierung einer ersten Dokumentenlage (2) und/oder mindestens eine weitere Einrichtung (11) zur Positionierung einer weiteren Dokumentenlage (3) umfasst, wobei die Vorrichtung (9) weiter mindestens eine Fügeeinrichtung (12) umfasst, wobei die mindestens eine weitere Dokumentenlage (3) über oder unter der ersten Dokumentenlage (2) anordenbar ist, wobei die Dokumentenlagen (2, 3) derart relativ zueinander anordenbar sind, dass ein ungefügter Lagenverbund (1), der aus der ersten und der weiteren Dokumentenlage (2, 3) bereitgestellt wird, mindestens einen verdickten oder verdünnten Teilbereich (14) aufweist, wobei ein Fügen des Lagenverbunds (1) durchführbar ist,
**dadurch gekennzeichnet, dass**
die Dokumentenlagen (2, 3) im ungefügten Lagenverbund (1) derart relativ zueinander angeordnet werden, dass zumindest ein Teilbereich des Lagenverbunds (1) durch das Fügen derart verformt wird, dass eine Information im oder auf dem ungefügten Lagenverbund (1) verändert wird, wobei die Vorrichtung (9) mindestens eine Recheneinrichtung zur Berechnung einer Anordnung der erfassbaren Information auf oder in der ersten Dokumentenlage (2) und/oder weiteren Dokumentenlage (3) derart, dass durch das Fügen eine Soll-Repräsentation der Information erzeugt wird, umfasst.

10. Vorrichtung nach Anspruch 9, **dadurch gekennzeichnet, dass** die Vorrichtung (9) mindestens eine Einrichtung zur Anordnung einer erfassbaren Information in oder auf der ersten Dokumentenlage (2) und/oder der weiteren Dokumentenlage (3) umfasst.

## Claims

1. Method for producing a document, wherein a first document layer (2) and at least one further document layer (3) are provided, wherein the at least one further document layer (3) is arranged above or below the first document layer (2), wherein the document layers (2, 3) are arranged relative to one another in such a way that an unjoined layer composite (1) is produced, which is provided from the first and the further document layer (2, 3), and which comprises at least one thickened or thinned part region (14), wherein the layer composite (1) is joined,
**characterised in that**
the document layers (2, 3) in the unjoined layer composite (1) are arranged relative to one another in such a way at least one part region of the layer composite (1) is deformed by the joining process in such a way that an item of information in or on the unjoined layer composite (1) is changed.

2. Method according to claim 1, **characterised in that** a maximum width of the further document layer (3) is smaller than a maximum width of the first document layer (2) and/or a maximum length (L2) of the further document layer (3) is smaller than a maximum length (L1) of the first document layer (2).

3. Method according to any one of the preceding claims, **characterised in that** the further document layer (3) comprises a rectangular, circular, or oval-shaped edge.

4. Method according to any one of the preceding claims, **characterised in that** the first document layer (2) comprises at least one printed region (6), wherein the document layers (2, 3) in the unjoined layer composite (2) are arranged relative to one another in such a way that the thickened or thinned part region (14) comprises at least one part region of the printed region (6).

5. Method according to claim 4, **characterised in that** a photograph or a part thereof is printed in the printed region (6).

6. Method according to any one of claims 1 to 5, **characterised in that** the change in the information takes place by way of a geometric transformation of at least one part region of the layer composite.

7. Method according to any one of claims 1 to 6, **characterised in that** an item of information in or on the unjoined layer composite (1), which is different from a reference item of information, is changed by the joining process into the reference item of information.

8. Method according to any one of the preceding claims, **characterised in that** the layer composite (1) after the joining exhibits a changed density.

9. Device for producing a document, wherein the device (9) comprises a first apparatus (10) for positioning a first document layer (2) and/or at least one further apparatus (11) for positioning a further document layer (3), wherein the device (9) further comprises at least one joining device (12), wherein the at least one further document layer (3) can be arranged above or below the first document layer (2), wherein the document layers (2, 3) can be arranged relative to one another in such a way that an unjoined layer composite (1), which is produced from the first and the further document layer (2, 3), comprises at least one thickened or thinned part region (14), wherein a joining of the layer composite (1) can be carried out,
**characterised in that**
the document layers (2, 3) in the unjoined layer composite (1) are arranged relative to one another in such a way that at least one part region of the layer composite (1) is deformed by the joining process in such a way that an item of information in or on the unjoined layer composite (1) is changed, wherein the device (9) comprises at least one calculating device for calculating an arrangement of the detectable item of information on or in the first document layer (2) and/or of the further document layer (3) in such a way that, by the joining, a reference representation of the information is produced.

10. Device according to claim 9, **characterised in that** the device (9) comprises at least one apparatus for arranging a detectable item of information in or on the first document layer (2) and/or on the further document layer (3).

## Revendications

1. Procédé servant à fabriquer un document, dans lequel une première couche de document (2) et au moins une autre couche de document (3) sont fournies, dans lequel l'au moins une autre couche de document (3) est disposée par-dessus ou sous la première couche de document (2), dans lequel les couches de document (2, 3) sont disposées de telle manière les unes par rapport aux autres qu'un composite de couches (1) non assemblé, qui est fourni à partir de la première et de l'autre couche de document (2, 3), présente au moins une zone partielle (14) épaissie ou amincie, dans lequel le composite de couches (1) est assemblé,
**caractérisé en ce que**
les couches de document (2, 3) sont disposées les unes par rapport aux autres dans le composite de couches (1) non assemblé de telle manière qu'au moins une zone partielle du composite de couches (1) est déformée par l'assemblage de telle manière qu'une information dans ou sur le composite de couches (1) non assemblé est modifiée.

2. Procédé selon la revendication 1, **caractérisé en ce qu'**une largeur maximale de l'autre couche de document (3) est plus petite qu'une largeur maximale de la première couche de document (2) et/ou une longueur maximale (L2) de l'autre couche de document (3) est inférieure à une longueur maximale (L1) de la première couche de document (2).

3. Procédé selon l'une quelconque des revendications précédentes, **caractérisé en ce que** l'autre couche de document (3) présente un profil de bord de forme rectangulaire, un profil de bord de forme circulaire ou ovale.

4. Procédé selon l'une quelconque des revendications précédentes, **caractérisé en ce que** la première couche de document (2) présente au moins une zone (6) imprimée, dans lequel les couches de document (2, 3) sont disposées dans le composite de couches (1) non assemblé les unes par rapport aux autres de telle manière que la zone partielle (14) épaissie ou amincie comprend au moins une zone partielle de la zone (6) imprimée.

5. Procédé selon la revendication 4, **caractérisé en ce qu'**une photographie ou une partie de celle-ci est imprimée dans la zone (6) imprimée.

6. Procédé selon l'une quelconque des revendications 1 à 5, **caractérisé en ce que** la modification de l'information est effectuée par une transformation géométrique d'au moins une zone partielle du composite de couches.

7. Procédé selon l'une quelconque des revendications 1 à 6, **caractérisé en ce qu'**une information dans ou sur le composite de couches (1) non assemblé, qui est différente d'une information théorique, est modifiée par l'assemblage dans l'information théorique.

8. Procédé selon l'une quelconque des revendications précédentes, **caractérisé en ce que** le composite de couches (1) présente après l'assemblage une densité variable.

9. Dispositif servant à fabriquer un document, dans lequel le dispositif (9) comprend un premier système (10) servant au positionnement d'une première couche de document (2) et/ou au moins un autre système (11) servant au positionnement d'une autre couche de document (3), dans lequel le dispositif (9) comprend par ailleurs au moins un système d'assemblage (12), dans lequel l'au moins une autre couche de document (3) peut être disposée par-dessus ou sous la première couche de document (2), dans lequel les couches de document (2, 3) peuvent être disposées l'une par rapport à l'autre de telle manière qu'un composite de couches (1) non assemblé, qui est fourni à partir de la première et de l'autre couche de document (2, 3), présente au moins une zone partielle (14) épaissie ou amincie, dans lequel un assemblage du composite de couches (1) peut être effectué,
**caractérisé en ce que**
les couches de document (2, 3) sont disposées dans le composite de couches (1) non assemblé de telle manière les unes par rapport aux autres qu'au moins une zone partielle du composite de couches (1) est déformée par l'assemblage de telle manière qu'une information dans ou sur le composite de couches (1) non assemblé est modifiée, dans lequel le dispositif (9) comprend au moins un système de calcul servant à calculer un agencement de l'information pouvant être détectée sur ou dans la première couche de document (2) et/ou sur ou dans l'autre couche de document (3) de telle manière qu'une représentation théorique de l'information est produite par l'assemblage.

10. Dispositif selon la revendication 9, **caractérisé en ce que** le dispositif (9) comprend au moins un système servant à agencer une information pouvant être détectée dans ou sur la première couche de document (2) et/ou dans ou sur l'autre couche de document (3).
